# EUROPEAN PATENT SPECIFICATION

(11) **EP 0 478 854 B1**
(45) Date of publication and mention of the grant of the patent: **28.09.1994**
(21) Application number: 90310896.7
(22) Date of filing: 04.10.1990
(51) Int. Cl.: A01K 7/04, A01K 5/02, A01K 7/00

(54) **Automatic supply system for drinking water and liquid silage extract for livestock**
Zuführanlage für Trinkwasser und flüssigen Ensilierungsextrakt für Tiere
Système d'alimentation d'eau potable et d'extrait liquide d'ensilage pour animaux domestiques

(43) Date of publication of application: 08.04.1992
(73) Proprietor: Johansen, Arne Halvard, N-8100 Misvaer (NO)
(72) Inventor: Johansen, Arne Halvard, N-8100 Misvaer (NO)
(74) Representative: Wombwell, Francis

(56) References cited:
- FR-A- 726 231
- GB-A- 2 098 447
- US-A- 1 215 030
- US-A- 1 841 880
- US-A- 3 086 500
- US-A- 3 745 977
- US-A- 3 946 703
- US-A- 4 559 905

## Description

The present invention relates to an automatic drinking water and liquid silage extract supply system for livestock, and, more particularly, to a system which can be used for the distribution of drinking water mixed with liquid silage extract or for distributing solely liquid silage extract. More specifically, the present invention relates to a system in which watering bowls are provided for each animal, each watering bowl containing a floating plate which floats on the surface of the liquid distributed to the system and reduces the surface area of the liquid which is in contact with the atmosphere.

The feeding of a large number of animals in modern commercial farming is usually achieved using automatic watering systems which supply water to individual drinking bowls for each animal. The automatic watering system aims at providing fresh water to the animals in accordance with their individual needs.

Liquid silage extract is a by-product of the production of silage. It is nourishing and animals enjoy drinking it.

The supply of pure silage extract from silos or of such extract diluted with water cannot be effected satisfactorily using known automatic watering systems. Silage extract contains substances and micro-organisms which will initiate a fermenting process when the extract is exposed to air. When the extract or a solution thereof is left to stand in the system, it will be exposed to air in two main places; in the float-regulated feed tanks, and in the watering bowls for the animals.

In the individual watering bowls, the fermenting process is easily initiated. Consequently, the quality and the taste of the solution will be affected. In addition, a coating will appear on the inside of the bowls and, to a lesser degree, in the feed conduit system. Regular cleaning of the whole system is therefore essential. The only effective cleaning method is the so-called pigging operation. The supply system is drained of all liquid and subjected to a vacuum. Elastic pigs are then sucked through the system and scrape the pipes clean. A prerequisite is therefore that the system must be made air-tight so that no air can enter the system through the feed inlets in the bowls. This also means that feed pipes must be plugged individually before initiating the cleaning operation. This is expensive and time-consuming work in, for example, large stables or cowsheds.

When the animals drink from their bowls, they push their snouts right down into the liquid, and when they have finished drinking, will carry the liquid remaining in their mouth over the edge of the bowl. This liquid will drip on the floor of the stall or on the front plate of the bowl. This is due to the fact that when the animal stops imbibing liquid, it cannot swallow what is in its mouth without imbibing more liquid. Such spilling on the fittings in the stalls or on the front plates will cause corrosion, favour the development of fungi and unpleasant smells, and will result in a general deterioration of the environment for the animals.

The latest technical advances in the field of automatic watering systems for livestock can be found in United States Patent Specifications Nos. 1,215,030; 1,841,880 and 3,086,500 where the construction of such supply systems with feed tanks, feed conduits and watering bowls is disclosed. Common in each of these systems is that, in all of the watering bowls, a large surface area of the liquid is exposed to the atmosphere, and that it is not possible automatically to seal the inlet in the watering bowl after draining the system. Consequently, these systems are hardly suitable for the supply of anything but clean drinking water.

United States patent 3,745,977 discloses an alternative arrangement in which each bowl is equipped with a plate floating on the surface of the liquid, which isolates the liquid from the air, so that the bowl may be used outdoors even when the air temperature drops below the freezing point of the water. Normally an inwardly directed lip is provided around the upper periphery of the bowl to limit the upward displacement of the plate. To serve its purpose, the plate must have a buoyancy so high that it will not be suitable for the purpose of the plate in the present invention. If a plurality of plates are pressed down into the liquid simultaneously without any liquid being removed, that is to say, without the animals drinking, the level of the liquid will rise in the spaces created by an amount corresponding to the volume of the plates. If the animals release their pressure on the plates without having drunk anything, the plates will rise like corks and trap a certain quantity of liquid above their surface. This will give the animals a chance to lick or lap the trapped liquid, and spillage will ensue.

An alternative disclosed in United States patent specification No. 3,946,703 is a watering bowl equipped with a spherical body which must be rotated to cause the fluid to rise into the upper region of the bowl. The fluid is then removed by the animal's licking action. This device is, however, only suitable for molasses or other viscous fluids.

A watering system can be used for supplying water mixed with liquid silage extract or for pure extract if it is suitable altered.

The present invention seeks to provide a feed system having a floating plate provided in each watering bowl which provides automatic sealing of the feed pipe inlet in each bowl when the system is drained, so that the system may be scraped clean by pigging.

Further, as is known, the provision of a floating plate reduces the surface area of the liquid exposed to the air. By so doing, the initiation and subsequently the rate of any fermentation process in the liquid or liquid mixture are delayed.

Furthermore, the present invention, also seeks to provide a system in which, when the animals are drinking, they are prevented from pushing their snouts right into the liquid, and hence to carry any liquid remaining in their mouths after drinking, over the edge of the bowl. Moreover, when the animals drink, any coating resulting from fermentation is, to a large extent, scraped off the walls of the bowl.

The animals will not be able to lick or lap the liquid as opposed to drinking it, because they cannot reach the liquid without submerging the plate under the surface.

According to the present invention, there is provided an automatic drinking water and liquid silage extract supply system for livestock in the form of a closed flow ring main system including two or more float-regulated feed tanks connected in series with one another by bottom conduit means, each said feed tank further including inlets for silage extract and water, watering bowls for each animal, each said watering bowl having an inlet in its base, a riser conduit being connected to, and in fluid flow communication with said bottom conduit means, by means a T-connector, said riser conduits being connected to each said watering bowl inlet and being of a smaller size than said bottom conduit means, drain conduits of the same size as said riser conduits, said drain conduits being connected to said bottom conduit means by T-connectors and overflow conduits extending from the upper portion of each said feed tank to a drain, floating plates being provided in each said watering bowl so as to float on the surface of the liquid contained therein, said floating plates reducing the surface area of the liquid in contact with air, characterised in that the underside of each floating plate in contact with the liquid is rubber-coated and in that said plates seal said inlets to said watering bowls when said bottom conduit means is drained and when, subsequently, the system is placed under vacuum and a plurality of pigs made of a soft material are sucked through said bottom conduit means.

One embodiment of the present invention will be further described, by way of example, with reference to the accompanying drawings, in which:-
Figure 1 is a schematic diagram showing an automatic watering system for livestock in accordance with the present invention;
Figure 2 shows a a floating plate in a watering bowl forming part of the system when the system is full of liquid;
Figure 3 is a view similar to Figure 2 and shows the displacement of the plate when an animal drinks from the bowl;
Figure 4 is a view similar to Figure 2 and shows the wave movement caused when animals attempt to lick or lap the liquid; and
Figure 5 is a view similar to Figure 2 and shows the floating plate functioning as an automatic sealing device when the system is drained.

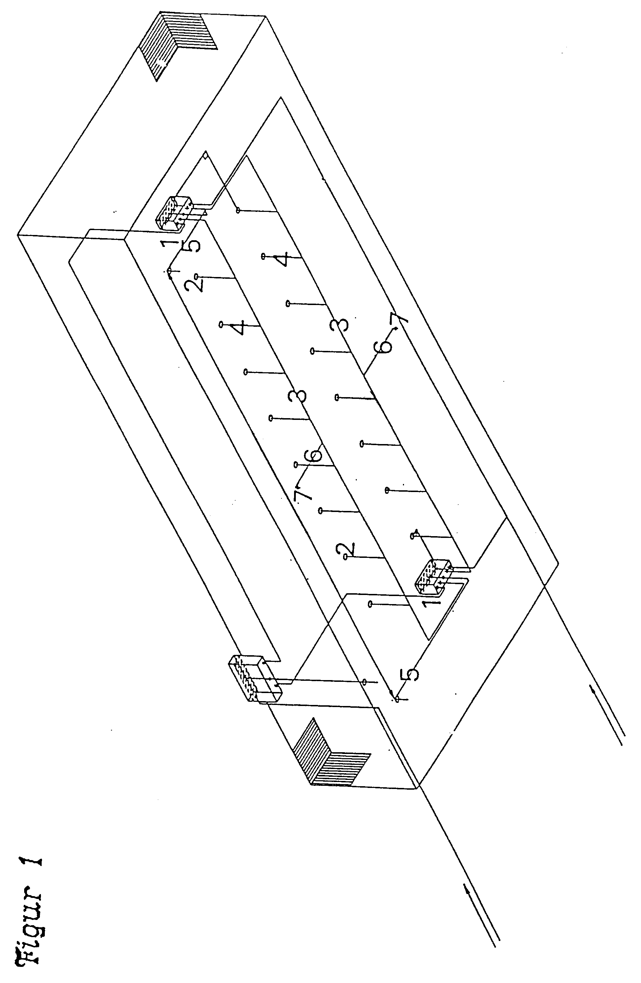

Figure 1 shows a schematic diagram of the supply system for water and/or liquid silage extract. Conduits for water and silage extract supply each feed tank 1. The conduits terminate in float valves in each feed tank 1. For silage extract this Figure also shows the position of a day or week tank (not referenced). This figure shows a supply system having two feed tanks 1, but for larger systems it will be necessary to install a plurality of tanks in series.

Each animal is provided with an individual watering bowl 2. Bottom conduit means 3 are necessary to achieve the desired ring main effect in the system. From the bottom conduit means 3, riser pipes 4 feed the individual bowls 2.

Overflow from the feed tanks 1 passes into overflow conduits 5 which lead to a gutter in the floor, to a manure grate, or to any other desired outlet. The overflow conduit 5 passes through the base of the feed tank 1 and its inlet is situated slightly above the normal level of liquid in the tank.

Drain conduits 6 branch off the bottom conduit means 3 and are equipped with taps 7.

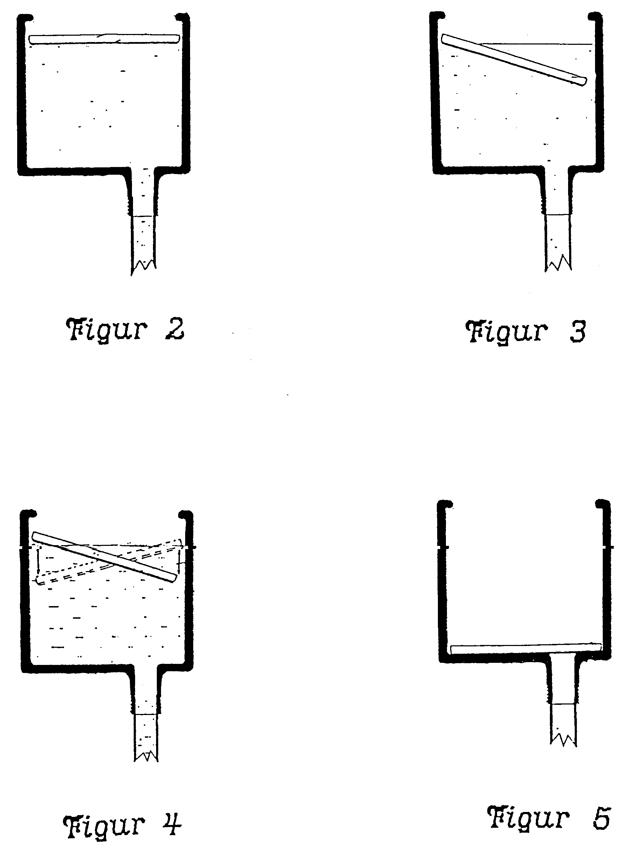

In Figures 2 to 5, there are shown details of the watering bowls 2, each equipped with a floating plate 8. The buoyancy and the diameter of this plate in relation to the bowl 2 are selected such that the animals cannot push their snouts all the way into the liquid when they drink, and the consequent spillage described hereinbefore is thus avoided.

When the animals drink, the floating plate 8 will be tipped first to one side, then to the other side. Such movement imparted to the floating plate 8 causes the plate to scrape off any coating which has developed on the walls of the watering bowl 2. Any scraped-off coating will be deposited on the bottom of the bowl and can be removed by pigging.

The floating plate 8 is rubber-coated on its underside, and when the system is drained, this provides an automatic sealing of the inlet in the bowl 2.

## Claims

1. An automatic drinking water and liquid silage extract supply system for livestock in the form of a closed flow ring main system including two or more float-regulated feed tanks (1) connected in series with one another by bottom conduit means (3), each said feed tank (1) further including inlets for silage extract and water, watering bowls (2) for each animal, each said watering bowl (2) having an inlet in its base, a riser conduit (4) being connected to, and in fluid flow communication with, said bottom conduit means (3) by means of a T-connector, said riser conduits (4) being connected to each said watering bowl inlet and being of a smaller size than said bottom means (3), drain conduits (6) of the same size as said riser conduits (4), said drain conduits (6) being connected to said bottom conduit means (3) by T-connectors and overflow conduits (5) extending from the upper portion of each said feed tank (1) to a drain, floating plates (8) being provided in each said watering bowl (2) so as to float on the surface of the liquid contained therein, said floating plates (8) reducing the surface area of the liquid in contact with air, characterised in that the underside of each floating plate (8) in contact with the liquid is rubber-coated and in that said plate (8) seal said inlets to said watering bowls (2) when said bottom conduit means (3) is drained and when, subsequently, the system is placed under vacuum and a plurality of pigs made of a soft material are sucked through said bottom conduit means (3).

## Patentansprüche

1. Eine automatische Zuführanlage für Trinkwasser und flüssiges Silage-Extrakt für Tiere in Form einer geschlossenen, ringartigen Hauptanlage mit zwei oder mehreren, strömungsabhängig gesteuerten Vorratstanks (1), die untereinander in Reihe durch am Boden verlegte Leitungen (3) verbunden sind, wobei jeder Vorratstank (1) ferner Zuläufe für Silage-Extrakt und Wasser umfaßt, Tränken (2) für jedes Tier vorgesehen sind, jede Tränke (2) einen Zulauf in seinem Boden hat, an den jeweils eine aufsteigende, über einen T-Verbinder strömungsmäßig mit der bodenseitig verlegten Leitung (3) verbundene Leitung (4) angeschlossen ist, die aufsteigenden Leitungen (4) an den Zulauf einer jeden Tränke angeschlossen sind und einen kleineren Querschnitt als die am Boden verlegten Leitungen (3) haben, die Ablaufleitungen (6) den selben Querschnitt, wie die aufsteigenden Leitungen (4) aufweisen, die Ablaufleitungen (6) über T-Verbinder an die am Boden verlegten Leitungen (3) angeschlossen sind, und die Überlaufleitungen (5) vom oberen Teil eines jeden Vorratstanks (1) bis zu einem Ablauf reichen, in jeder Tränke (2) eine Schwimmerplatte (8) vorgesehen ist, die jeweils auf der Oberfläche der in der Tränke vorhandenen Flüssigkeit schwimmt, wobei die Schwimmerplatten (8) die Oberfläche der Flüssigkeit verringern, die sich mit Luft in Kontakt befindet, dadurch gekennzeichnet, daß die sich mit der Flüssigkeit in Kontakt befindliche Unterseite einer jeden Schwimmerplatte (8) mit Gummimaterial überzogen ist, und daß die Schwimmerplatte (8) die Zuläufe zu den Tränken (2) abdichtet, wenn die am Boden verlegten Leitungen (3) entleert werden und die Anlage danach unter Vakuum gesetzt wird sowie eine Anzahl "pigs" aus weichem Material durch die am Boden verlegten Leitungen (3) gesaugt wird.

## Revendications

1. Dispositif d'alimentation automatique d'eau potable et d'extraction d'ensilage liquide pour du bétail sous la forme d'un dispositif principal en anneau à circuit fermé comprenant deux ou plusieurs réservoirs d'alimentation à régulation par flotteur (1) montés en série via un moyen de conduite inférieure (3), chacun desdits réservoirs d'alimentation (1) comprenant, de plus, des entrées pour l'extraction d'ensilage et d'eau, des auges d'eau (2) pour chaque animal, chacune desdites auges d'eau (2) possédant une entrée à sa base, une conduite montante (4) raccordée en communication audit moyen de conduite inférieure (3) au moyen d'un raccord en T, lesdites conduites montantes (4) étant raccordées à chaque dite entrée d'auge d'eau et étant de taille inférieure audit moyen de conduite inférieure (3), des conduites de drainage (6) de la même taille que lesdites conduites montantes (4), lesdites conduites de drainage (6) étant raccordées audit moyen de conduite inférieure (3) par des raccords en T et des conduites de débordement (5) s'étendant de la partie supérieure de chaque dit réservoir d'alimentation (1) vers un drain, des plaques flottantes (8) étant prévues dans chacun desdites auges d'eau (2) de façon à flotter à la surface du liquide contenu, lesdites plaques flottantes (8) réduisant la surface du liquide en contact avec l'eau,
dispositif caractérisé en ce que le côté inférieur de chaque plaque flottante (8) en contact avec le liquide est revêtu de caoutchouc et en ce que ladite plaque flottante (8) rend étanche lesdites entrées auxdites auges d'eau (2) lorsque ledit moyen de conduite inférieure (3) est drainé et lorsqu'ensuite, le dispositif est placé sous vide et une pluralité de racleurs en un matériau tendre sont aspirés à travers ledit moyen de conduite inférieure 3.
